# EUROPEAN PATENT APPLICATION

(11) **EP 1 800 545 A1**
(43) Date of publication of application: **27.06.2007**
(21) Application number: 05028275.5
(22) Date of filing: 23.12.2005
(51) Int. Cl.: A23K 1/18

(54) **Pet food and processes of producing the same**

(71) Applicant: NESTEC S.A., 1800 Vevey (CH)
(72) Inventor: Pibarot, Patrick, 80170 Guilauccort (FR); Waterlain, Annie, 80300 Lavieville (FR); Reynes, Pierre, 80090 Amiens (FR)
(74) Representative: Rupp, Christian

(57) **Abstract**

The present invention provides methods and products made thereby, wherein a reactive starch constituent, including an edible constituent, is thermally treated to react it, preferably in a dynamic process environment, to produce products ranging from high to quite low densities and from very strong to soft to apparently dry textures. The wide range of textures enables the provision of food products such as low calorie, digestible and safe, long duration pet food chews. Cooking is preferably carried in an extruder, preferably at low moisture or in the total absence of added water. The methods of dynamic cooking reduce cost in a number of ways including but not limited to decreased process steps, increased throughput, decreased capital expenses and decreased raw product cost. The present invention provides an edible composition that is produced using preactivated particles, mixing them with solvents providing bonds, inputting energy into the mixture via an extrusion process, which results in a firm cohesive material.

## Description

### BACKGROUND TO THE INVENTION

The present invention relates generally to edible compositions having high structural integrity. The compositions may include materials of manufacture as well as foods. More specifically, the present invention relates to methods for providing a digestible cohesive product of controllable texture and products so produced.

Numerous methods are available for producing food products and biodegradable polymers. In the case of foods, these methods may be categorized generally as static (still) or dynamic methods. Static methods may be defined as those in which a batch of constituents is disposed in a cooking vessel and allowed to remain still or free of movement while being cooked, such as in an oven baking process or pressure molding or baking process. These include processes in which the batch of material is caused to move on a conveyor through a cooking apparatus, such as a baking tunnel. Here the constituents would remain still in relation to the surface or vessel on or in which they were being transported.

Dynamic processes are those in which a quantity of constituents is fed into an apparatus - whether in a continuous or semi-continuous stream or batchwise - in which mechanical energy is imparted to these constituents to cause relative movement within the batch or stream while energy is absorbed to cause cooking. Such movement could include active or passive mixing. One dynamic thermal treatment method is extrusion, where constituents are caused to mix with each other while shear is being imparted within the extruder barrel. Extrusion can be used to produce a variety of food or edible products. The internal shear forces generated within the apparatus provide a substantial portion of the heat that is used for cooking the constituents. These edible products can be designed for human or animal consumption. Another dynamic cooking method makes use of a continuous mixer to cause relative internal movement of the constituents while thermal energy is applied to result in cooking.

With respect to pets, a variety of food products is available. Some of these products are produced through extrusion. Certain extruded products are designed to extend the duration of chewing by a pet, especially dogs, with the goal of providing a product with which pets can chew and enjoy. Pet owners often rate the value of a pet food product or pet snack by its chewing duration. "One bite and it is gone" is a frequent complaint of owners of large dogs, for example.

Products that facilitate extended chewing can help improve dental hygiene and reduce periodontal disease, which is a widespread problem for pet cats and dogs. This is because the natural diet of animals in the wild includes many foods that require extended chewing before the pieces are small enough to be swallowed, contributing to dental hygiene and facilitating digestion. In contrast, the diet of domesticated pets frequently lacks naturally chewy foods, depriving them of the above benefits.

Conventional food processing methods often do not produce products that have textures comparable to naturally chewy foods. Certain attempts have been made, to produce pet products having an extended chewing duration. But, most of these products exhibit certain disadvantages.

Some prior products are simply not edible. When the pets chew or break up and swallow these products, they suffer digestive problems. Some pass undigested through the pet and can contribute to diarrhea and increased fecal volume. Most pet owners want to reduce fecal volume, diarrhea and soft stools. Even some products that claim to be made from edible constituents are not edible in final form, because of processing that fails to ensure digestibility.

A number of patents and published patent applications disclose or relate to pet chews or related products. These patents and applications include: U.S. Patent Nos. 6,672,252, 6,455,083, 4,615,901, 5,296,209, 5,407,661, 3,759,714, and 3,580,728; and published patent applications WO 01/76386, GB 1,497,090, GB 1,591,406, WO 01/76386, US 2003/0219516, and US 2003/0168020. For example, European patent application number EP 0 552 897 A1 discloses an edible animal chew product with a flexible cellular matrix containing cellulose fibers, e.g., 20 to 50% corncobs and oral care additives. Corncobs and cellulose materials are not readily digestible and can also contribute to diarrhea and increased fecal volume.

There are chewy products that are formulated with digestibility in mind. However, some of these prior art chewy products are high in calories. It is desirable that such products therefore be fed as treats or snacks to comprise only a small portion of the pet's diet, so as not to create a dietary imbalance.

A further problem with some prior art chewy products is production cost. Certain chewy products are formulated with pliable materials that are designed to resist the pet's chewing force. The pliable materials tend to be expensive. Attempts to mix pliable materials and less expensive materials have created a complex balancing system in which it is often difficult to ensure that the less expensive materials do not compromise the strength and integrity of the more expensive pliable materials.

Still another problem with certain prior art highly resistant chewable products is safety. For example, one prior art chewable pet toy has a protein based thermoplastic composition with protein levels between 50 - 70%. High protein products, including those fabricated from refined high protein constituents, are not only expensive but may bring potential danger as well. Some experts believe that high protein levels can contribute to renal failure and may block the urinary tract in pets.

Some prior art products attempt to increase chewing duration by increasing the rigidity of the product. Certain of these products are virtually rock hard. These products can chip or break a pet's teeth. For example, one such commercially available product requires an operating pressure above 10 MPa to break. Many of the harder products of the prior art are glassy in nature and have a tendency to shatter into sharp, hard fragments when bitten. These fragments can lodge in the animal's throat or injure its mouth. This is especially a problem with products produced by high pressure injection molding techniques.

Product design also plays an important role in producing a product that is safe and has a long chewing duration. For example, some non-glassy products of the prior art may not shatter, but may be poorly designed, thereby causing extensive bleeding of the gums when chewed. In part, one of the problems of prior art chewy food products is that they have a limited range of textures to choose from, culminating in products having a texture that causes bleeding of the gums.

Furthermore, the textures of many chewy products are often unappealing and unpalatable. For example, extruded dry pet foods are typically provided in hard lumps having a dry, dusty appearance. They can be inconvenient for the consumer to handle. Still further, some prior art products are unstable, so that their texture changes with time and they lose desirable characteristics.

Some prior art chewy products are based on starch. Converting starch-based materials into solid articles is known. However, the injection molding equipment that is typically used to convert such starch-based materials is expensive and complex to operate and known methods of solidifying starch-based materials provide a limited range of textures.

Extruding food constituents at low water activities, although known, has until now been fraught with difficulty. For example, the constituents required for such extrusion were often expensive and produce a limited range of textures. When processing and cooking food, bio-polymers, such as starch and proteins, unravel first and then recombine, forming a desired structure, e.g., a biscuit shape. If this unraveling and recombination is restricted or interrupted, the resulting products have little binding and are relatively weak.

Unraveling can only occur in the liquid phase and is facilitated by hydration of the unfolding polymers. At low water activities there is little water available. These systems hence have limited hydration potential. Conventional extrusion processes are therefore operated at high water activity levels, wherein a large amount of water is added to facilitate hydration. The large amount of water necessitates energy-intensive and environmentally unfriendly post-extrusion drying or the adding of acid and other preservatives. This often has undesirable consequences for the products; for example, the water restricts the range of textures that can result.

Extrusion of pet foods is typically conducted at high moisture levels, e.g., approximately 26% moisture, and high water activities, e.g., a_{w} greater than 0.95. However, these parameters are too high to produce the desired textures for products of extended chewing duration. The water activity for extended chewing products has typically been less than 0.65, with moisture contents from about 7.0% to about 17%. At these water activities, however, if the methods of the prior art are used, there is insufficient water for hydration, and it is necessary to cook at very high temperatures and pressures or to cook at high temperatures for an extended period of time, which frequently results in high levels of starch damage and/or burning of the products.

A need therefore exists for improved food products that can provide a long chewing duration, are edible and have improved textures and for methods of producing same.

### SUMMARY OF THE INVENTION

The present invention provides edible compositions having a long chew duration and methods for manufacturing such an edible composition. In one embodiment the edible composition is a pet food.

The compositions of the present invention have structural integrity and are capable of resisting penetration and fracture, however they are flexible and pliable. The composition can have a wide range of textures, shapes, and sizes. For example, the compositions can be manufactured to be of any desired shape and/or size.

The term "pre-activated" herein used means an activated stage of the starch source effected by expanding/extruding the starch material.

The term "bridger" should be understood as a bridging molecule/substance capable of providing a bond or interaction of any kind between the starch source and/or protein source.

The composition of the present invention comprises a pre-activated, vegetable starch source and a bridger. In an embodiment, the starch source is created from an expanded cereal, pre-expanded cereal particles, pre-expanded breakfast cereals, pre-extruded rice, pre-extruded millet, pre-extruded wheat, puffed rice, puffed corn, and pre-extruded corn and combinations thereof. The raw material that is used to provide the composition is an expanded cereal. In another embodiment, the raw material is an expanded starch. In an embodiment, the expanded material has a lamellar structure.

The raw material is pre-processed such that it is transformed into a reactive material having specific reactive surfaces. In an embodiment, the resultant reactive material is pre-activated starch. Pre-processing technologies such as puffing, extrusion, and high-pressure lamination may be utilized to create a reactive surface. The reactive material is then processed under a range of diverse conditions to produce products with a broad range of textures.

In an embodiment, the reactive material is cooked in the presence of shear, e.g., thermally treated until melted, until a coherent edible mass is formed. In an embodiment, cooking is performed in an extruder. The cooking can be performed in the presence of any material, other than water, that has the capability to form bonds. Preferably the cooking is performed under low moisture conditions. In an embodiment, cooking is performed in the presence of a polyhydric solvent, preferably one that is non-aqueous. Because of the low moisture during processing, the product can be manufactured without the need for post-extrusion drying.

In an embodiment, the activated starch is combined with a polyol. In an embodiment, the activated starch is combined with gluten.

In an embodiment, the activated starch is combined with a protein.

The process of the present invention includes, in an embodiment, the steps of reducing, for example, grinding an expanded, dry starch constituent material into pre-expanded particles and disposing the pre-expanded particles, and a component capable of forming bonds, i.e. the bridger, in a dynamic thermal treatment device.

In an embodiment, the dynamic device is an extruder. The particles are retained within a section of the extruder for a sufficient period to ensure an extensive and near complete solvation of a sticky extrusion mass. These pre-expanded particles are selected to have a microscopic structure, capable of facilitating rapid solvation by a solvating component. The solvating component is preferably a solvent selected from the group consisting of polyhydric solvents.

In a preferred form of the invention, the starch is, or starch-like polymers of the particles are, substantially fully gelatinized. The pre-gelatinized polymers are found to solvate rapidly when cooked or extruded, due to the structure of the pre-expanded particles. A floury powder produced from the pre-expanded constituents or cereals has a density that is significantly lower than the density of a similar flour prepared from the native or non-expanded source equivalent.

A method of thermally treating the pre-expanded particles pursuant to the present invention includes controlling the energy imparted to the extrusion mass to obtain an optimal texture in the cooked product. Thereafter, this cooked mass of optimum texture can be formed into a broad range of shapes. Examples of suitable shapes in pet food applications include a dog biscuit and an elongate chunk.

The present invention allows for the production of long chewing duration products that are light, of low density, low in calories, e.g., dietary, and are resistive to the force of a bite, e.g., the bite of an animal or person. The bite force resistance is variable through the methods disclosed herein to customize products for different uses, such as dental hygiene products or a pre-determined optimum chewing period for a snack or other type of food product. The dental hygiene products may be used in a method of tartar control in a pet.

Pursuant to the present invention, methods for feeding and/or providing enjoyment to pets are provided. These methods include providing products manufactured from an expanded starch constituent to have an extended chewing duration, and administering these to a pet to chew, to improve the dental hygiene condition of the pet. The products are preferably low in density and low in calories per volume of product.

The invention thus further provides a product for use in a method of controlling obesity in a pet, the method including administering to the pet a product manufactured from an expanded starch constituent to have low density and low caloric content. The product preferably is chewable by the pet for an extended duration.

According to a further aspect of the invention, a method of operating a food manufacturing plant comprises the steps of providing a cooking apparatus, forming a product by providing a constituent comprising reactive material and operating the apparatus to cook the constituent, controlling a moisture level and water activity level in forming the product, such that the product does not need to be dried after forming. Preferably, no water is added to the constituent. An advantage of the present invention to provide an improved method of operating a food factory to reduce drying requirements and consequently the emission of the byproducts of the drying processes.

In one aspect of the invention, a product that has various textures comparable to chewy foods is provided.

In another aspect of the invention, the product is a digestible pet food or pet snack.

In still another aspect of the invention, a product is produced that is not glassy and will not break into brittle pieces when chewed.

An advantage of the present invention is that it provides a product has a long chewing duration.

A further advantage of the present invention is that it provides a product produced using an extrusion process that requires low moisture levels, e.g., less than 20% of total solvent by weight.

Another advantage of the present invention is that it provides a product that promotes and maintains dental health in dogs.

Furthermore, an advantage of the present invention is that it provides a product manufactured from an expanded starch having a low density and low caloric content per volume of product.

Moreover, an advantage of the present invention is that it provides a product that is a pet food having a variety of natural textures and long chew duration.

Another advantage of the present invention is that it provides a product that is resistant to penetration but is flexible and pliable.

A further advantage of the present invention is that it provides a digestible product having a polymeric matrix defining a body of varying shapes and sizes.

An advantage of the present invention is that it provides a digestible product composed of carbohydrates and polyols.

Moreover, an advantage of the present invention is that it provides a product composed of a starch, an expanded starch and a hydrogen-bond forming component to create a digestible polymeric matrix defining a body.

Still, an advantage of the present invention is that it provides a product that is a dietary pet food snack that does not significantly add to the metabolic energy provided by a pet's primary pet food.

Another advantage of the present invention is that it provides a process of manufacturing a pet food product comprising a starch and a polyol.

Further, an advantage of the present invention is that it provides a process of manufacturing a pet food product by cooking a carbohydrate in the presence of a bond providing component, other than water.

A further advantage of the present invention is to provide a safe long duration chewable pet food product.

Still another advantage of the present invention is to provide an improved pet product that can be used for promoting and maintaining dental hygiene.

Yet a further advantage of the present invention is to provide a low cost method of producing pet foods.

Moreover, an advantage of the present invention is to provide a method of producing products having a wide range of textures.

Still further, it is an advantage of the present invention to provide a method of producing products having a light texture but long chewing duration.

An advantage of the present invention is that it does not require hydration to unfold the polymers.

Yet further, it is an advantage of the present invention to provide an improved method of producing chewy products for pets.

A further advantage of the present invention is to provide a more cost-effective method of producing chewy pet food products.

Additional features and advantages of the present invention will be described in and apparent from the detailed description of the presently preferred embodiments and the figures.

### BRIEF DESCRIPTION OF THE FIGURES

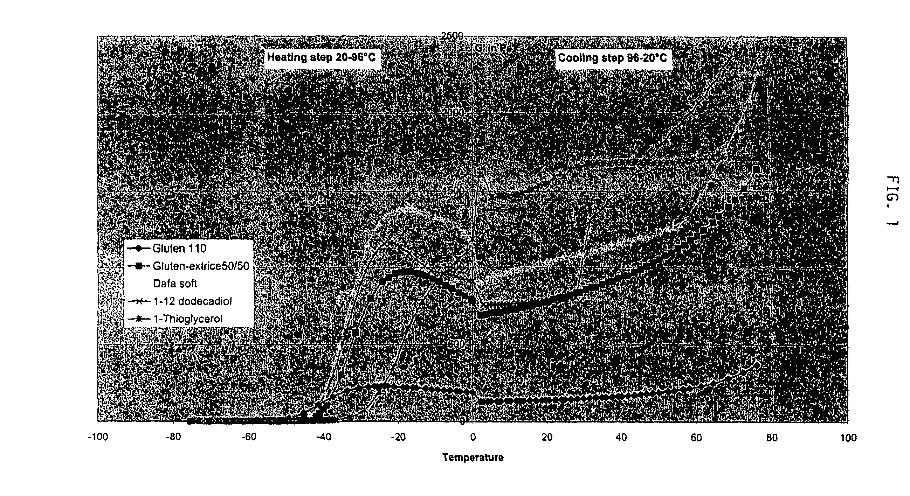

Figure 1 illustrates rheological curves of mixtures of gluten and extruded rice with or without bridger addition.

### DETAILED DESCRIPTION OF THE INVENTION

The present invention provides edible compositions that can be used in the manufacture of various finished food articles. More specifically, the present invention relates to methods for providing digestible cohesive materials of a controllable texture. In an embodiment, the composition is a pet food product.

Generally, the product of the present invention comprises at least one pre-activated material composed from a vegetable containing starch source, and at least one bridger that is defined as additional molecules that bind or create a complex between a plurality of pre-activated materials or between the pre-activated material and the protein. In one preferred embodiment, the starch source is derived from a high amylose cereal source, a waxy-cereal source and a combination thereof.

In an embodiment, the vegetable starch source includes a cereal source selected from rice, millet, wheat, corn, rye, buckwheat, barley, sorghum, and cassava; or potato, soy, pea, lupin, tapioca and combinations thereof. Furthermore, the starch sources may consist of a pure starch which is pre-cooked, native, or modified.

In one embodiment at least one protein source is included. The protein source is selected from an animal, vegetable, dairy, biomass source or combinations thereof. The animal protein is selected from the group consisting of at least one of the following: beef, chicken, turkey, pork, fish, lamb, duck, rabbit, albumin, eggs, gelatin, blood-plasma, salmon, tuna, cod, hake, mackerel, a meat-by-product or combinations thereof. The vegetable protein is selected from the group consisting of at least one of the following: soy, wheat, millet, buckwheat, rye, sorghum, cassava, lupin, tapioca, corn, rice, bean, lima bean, legumes, pea, chickpea, alfalfa, potato, barley, oat, pretreated vegetable protein and combinations thereof. One preferred embodiment, the vegetable protein is gluten. Furthermore, the protein source is a dairy source, e.g. casein, whey, and milk. In still another embodiment, the protein material is a biomass such as a micro-organism culture. The protein may be provided as a protein concentrate. The protein may be natural; it may be extracted from a natural source; it may be derived from a chemical pre-process; or it may be derived from a physical modification.

The bridger is added to improve the texture of the finished product. In an embodiment, more than one bridger can be utilized. A bridger can create a hydrogen-bond, an ionic bond, an apolar interaction, a covalent bond and a combination thereof. In an embodiment, the bridger is selected from the following group to create a hydrogen bond:
a) any molecular species that contains polar or polarizable chemical groups able to establish hydrogen bonds for example hydroxyl, sulfhydryl, sulfonyl groups or any combination thereof;
b) any oligosaccharide which is able to establish polar bonds, e.g., glucose, fructose, xylose, lactose, sorbitol, malto-dextrines, saccharose in the form of a syrup or powder and any combination thereof;
c) any polyhydric solvent, e.g., ethane diol, propanol-1; propanol-2; propane diol-1; 2,propane diol-1; 3, propane triol (glycerol), and superior homolog of polyol series and any combination thereof;
d) amino acid or peptide with sulfhydryl, hydroxy or amino groups and any combination thereof.

In an alternative embodiment, the bridger is selected from the following group to create an ionic bond: sucrose fatty acid esters, sucrose stearate, glyceryl monostearate, polyoxyethylene monostearate, L-ascorbyl 6-palmitate, ascorbyl stearate, 6-O-palmitoyl-L-ascorbic acid, calcium and sodium stearoyl-2-actylates (SSL), succinylated monoglyceride (SMG), ethoxylated monoglycerides, polysorbates, diacetyl tartaric acid esters of mono- and diglycerides (DATEM), stearoyl tartrate, 3-mercapto-1,2 propanediol, dodecane thiol, thio-propanediol, methylsulfonylmethane (dimethyl sulfone), mannitol, maltose, lactose, dextrose, sucrose, sorbitol, fructose, glucono-delta-factone, propionate, sorbate, lysotecithin, fatty acids, hydrolysable tannins, phenolic acids, and polyphenols and any combination thereof.

A further embodiment, a bridger is selected from the following group to create a covalent bond consisting of ionic bridgers: cationic and anionic emulsifiers, fatty acid derivatives, and phospholipids and any combination thereof.

A still further embodiment hydrophobic derivatives polyphenolic derivatives, lipogluten; thio-glycerides; tannins, emulsifiers, sugars, polyols, sugar modifiers, modified starch, and plastifiers and any combination thereof.

A native starch granule is a crystalline structure composed of amylose and amylopectin that does not have any reactive sites. The cross-section of the granule consists of alternating layers of amylose and amylopectin. Normally as described in the prior art, after gelatinization occurs an amorphous mixture of amylose and amylopectin occurs. However, the pre-activation process utilizes low moisture content to create sheets of amylopectin where amylose is oriented on the surface. The sheets produce a large specific surface area (m²/g) compared to the prior art. On this surface, a number of reactive sites are available. The reactive sites consist of amylose or available terminal helices of amylopectin molecules. This large available specific surface presents a higher chemical reactivity as compared to the materials used in the prior art.

A pre-process is utilized to produce the pre-activated starch material. The pre-process creates high reactive specific surfaces on the pre-activated material. A variety of processes can be used to produce the reactive surfaces. Any technology which is able to produce a reactive surface can be used, including: extrusion; puffing; lamination; high pressure; micro-waves; ultrasounds; enzymatic; baker oven; steam oven; pulse electrical fields; and grinding. Some pre-activated materials are commercially available, such as extruded rice or puffed rice, e.g. Rice Krispies^{®}, manufactured by Kellogg Company, Battle Creek , Michigan.

The pre-activated starch material provides a high specific reactive surface that chemically reacts with an animal and/or vegetable protein and the bridger to form a specific network that results in a variety of new textures. A range of textures is formed by varying the proportions of the pre-activated material, proteins and bridgers. In still another embodiment, other new textures are formed by chemically reacting the pre-activated starch material with a bridger. The chemical reaction may be improved by utilizing high amylose materials. Normally, waxy starch has a low reactive surface because it lacks amylose, but by utilizing the pre-activation process there is an increase in the number of reactive sites on the surface. The reactive sites are formed by terminal helices from depolymerized amylopectin.

Fig. 1 shows rheological curves of mixtures of gluten and extruded rice with or without bridger addition.

The following curves are acquired with a rheometer (AR1000 - TA instrument ). The measurement is made with a plate to plate module with 1 mm gap. The G' (elastic modulus expressed in Pascal) is recorded as function of temperature of the sample which is heated or cooled down by a Peltier effect. The sample is heated up to 96° C (first left part of the curve), then kept at 96°C during 10 minutes (point corresponding to the abscise origin; T°C variation 0°C) and then cooled down to 20°C (right part of the curve).

The objective is to compare a mixture of gluten (G) and extruded rice (Rizinel®) (G2) to the same mixture with addition of various bridgers. Additionally, the mixture may be also compared to the gluten tested alone. The dough is obtained by mixing powders with Glycerol and water and then set between the plates for measurement. The potential final relative texture of the finished product is given by the G' value at the end of the cooling step (last value on the right of the curve).

The bridgers in these examples have been selected to represent three main chemical categories:
o Mono- an Di- glycerides emulsifiers
o Long carbon chain with end polar groups (e.g. alcohol)
o Combination of hydroxyl and sulf-hydryl functions.
   Bridgers have been added to the mixture at level of 0.05% of the total mixture for Dafasoft®, 0.5% for Dodecanediol and 10% for Thioglycerol.
   It may be seen from the curve that the addition of bridgers resulted in higher G' values than the G' value obtained with the mixture of gluten (G) and extruded rice (G2) alone.

1-12 Dodecanediol resulted in 50% texture improvement after cooling and Mono- Di- glyceride mixture (Dafasoft®) in 32% texture improvement as compared to the reference mixture without bridgers. The texture improvement is due to gluten - starch network building-up that should result in higher hardness of the resulting cohesive mass.

Thio-glycerol did not allow a significant texture improvement after cooling. Nevertheless, the texture of the mixture with added Thioglycerol showed a more stable texture variation at temperature from 80° to 20° indicating a significant interaction between gluten and extruded rice at higher temperatures. Furthermore, the establishment of the gluten-starch network is slower than with the other mixture and occur at higher temperature during the heating step.

A reaction process may consist of a chemical reaction between the reactive starch material, protein and bridgers in the presence of other optional materials. In another embodiment the reaction process consists of a chemical reaction between the reactive materials and bridgers in the presence of other optional materials. Optional materials such as additives may include at least one additional constituent selected from the group consisting of fibers, cellulose, bentonite, dicalcium phosphate, a nutrient mixture, a reactive sugar, an amino acid, and inert or non-digestible fillers. The mixture may further include a preservative. Suitable examples include potassium sorbate, sorbic acid, methyl para-hydroxybenzoate, calcium propionate and propionic acid. The reaction processes used to form the finished product include the following: extrusion, cooking, puffing, lamination, high pressure, micro-waves, ultrasounds, enzymatic, rotary molding, molding, injection molding, thermo molding, cutting, baker oven, steam oven, retorting, and pulse electrical fields.

A method of the production of an edible composition comprises the steps of disposing about 10 % to about 90 % by weight of at least one pre-activated, vegetable starch source, and 0.1 to 40 % by weight of at least one bridger in a dynamic device, mixing the constituents to form a homogenous mixture and subjecting the mixture to a dynamic thermal treatment.

In a preferred embodiment of the method, at least one protein source is added to the mixture.

The reaction process of the present invention, according to an embodiment, provides for cooking of the reactive material of the constituent to obtain a product having a desired chewability. The method provides for the reactive material to be processed under a diverse range of conditions by varying selected cooking parameters to produce products with a broad range of textures. This allows one to produce a food, such as a pet food or a pet snack or treat, that has a long chewing duration.

The processes of the present invention includes structuring or shaping the product in general, and is not limited to producing edible long chewing duration products for pets. The products of the present invention have a broad range of textures and exhibit high degrees of flexibility and strength.

The wide range of textures enables the provision of food products such as low calorie, digestible and safe, long duration pet food chews. Cooking is preferably carried in an extruder, preferably at low moisture or in the total absence of added water. The methods of dynamic cooking reduce cost in a number of ways including but not limited to decreased process steps, increased throughput, decreased capital expenses and decreased raw product cost.

The product of the present invention comprising pre-activated starch materials, proteins and bridgers, has a broad range of textures and exhibits high degrees of flexibility and strength. The characteristics of this end product is widely variable and depends upon how the processing parameters are controlled. For example, the final product will depend on the extrusion variables such as barrel temperature, screw configuration, nozzle size and shape, screw speed, and the moisture content of the material prior to processing. In the pet food area, the possible applications are pet treat products, semi-moist pet food products, wet pet food retorted products or dry pet food products.

In a preferred embodiment, the edible composition of the present invention comprises the pre-activated, vegetable starch source in an amount of 30 % to 50 %, the protein in an amount of 0 % to 40 % and the bridger in an amount of 10 % to 30 %, all values based on dry matter.

Particular preferred edible compositions are those having combined the following components:
extruded corn starch (30%) / frozen meat (20%) / pork gelatin (10%) / polyphenols (3%) / glycerol (15%);
extruded high amylase corn starch (35%) / frozen meat (20%) / pork gelatin (10%) / glycerol (86:20%);
puffed corn whole grain (30%) / pork gelatin (15%) / DATEM (5%) / sorbitol (5%) / glycerin (86:12%);
puffed high amylase corn starch (35%) / pork gelatin (15%) / DATEM (5%) / sorbitol (5%) / glycerin (86:12%) .

The invention thus also provides methods for producing edible compositions, which have a texture that requires them to be chewed for an extended period before they can be swallowed. The range of texture which may be achieved varies from very hard to soft structure. In some applications the texture may be aerated and fragile. In one embodiment, the finished product is chewy. In another embodiment, the finished product is not chewy. In one embodiment, edible products are provided for use as chews or treats for pets. The moisture content of the finished product ranges from about 5% to about 85%. In one embodiment, the product is shelf stable. In another embodiment, the product is contained within a sterilized package. The product can take any shape or form and is of any size.

The cooking (heating) is carried out preferably at low water activity and under low moisture conditions. Prior to the cooking, the expanded starch constituent and the bridger component, when used, are preferably mixed together to form a substantially homogeneous mixture, which is then placed in a cooking vessel. Preferably, the mixture comprises from about 10% to about 90% by weight of the starch constituent and more preferably from about 40% to about 80% by weight of the starch constituent. Preferably, the mixture comprises from about 0% to about 50% water by weight. Further preferably, the mixture comprises from about 1% to about 15% water by weight. Preferably the mixture comprises from about 0.1% to 40% by weight of the bridger component. Further preferably, the mixture comprises from about 0.5% to about 20% of the bridger component by weight. In an embodiment the mixture comprises 11-22% of the bridger component. In an embodiment the mixture comprises 10-19% of the bridger component. In an embodiment the mixture comprises 15-30% of the bridger component.

The following examples are provided as indicative of how to utilize the methods described above.

### EXAMPLE 1:

### Dry mix (% of the total recipe) (combination 1):

- 21 % Expanded rice (RIZINEL EX 180)
- 15.6% Wheat gluten
- 3 % Puffed wheat
- 3 % Sorbitol
- 3 % Poultry meal
- 15.6 % Glycerol
- 21.9 % Water
- 16.9 % Other ingredients

### The extrusion is carried out keeping the following parameters:

- 300 RPM
- SME = 240 kJ/kg
   In alternative embodiments, the same extrusion parameters along with other combinations of reactive starch materials, protein sources and bridgers can be utilized as described in Table 1:

**Table 1**

| | Reactive Material | Protein Source | Bridgers |
|---|---|---|---|
| Combination 2 | RIZINEL® EX 180: 33% | Wheat Gluten : 25% | Glycerol 86 : 20% |
| Combination 3 | RIZINEL® EX 180: 33% | Pork Gelatin : 15% | Glycerol 86 : 20% |
| Combination 4 | RIZINEL® EX 180: 33% | Wheat Gluten : 25% | Sorbitol: 5% -Glycerol 86:15% |
| Combination 5 | RIZINEL® EX 180: 33% | Pork Gelatin : 15% | Dimodan: 3% -Glycerol 86:15% |
| Combination 6 | RIZINEL® EX 180: 33% | Wheat Gluten : 25% | Dimodan: 3% -Glycerol 86:15% |
| Combination 7 | High pressure rice: 30% | Wheat Gluten : 25% | Sucrose Ester of fatty acids: 5% -Glycerol 86: 15% |
| Combination 8 | Puffed high amylose corn starch: 35% | Pork Gelatin : 15% | DATEM: 5% / Glucose syrup : 5% / Glycerin 86: 12% |

| | | | |
|---|---|---|---|
| Dimodan® is manufactured by Danisco, Copenhagen, Denmark. RIZINEL® is manufactured by Soufflet, SA, Valenciennes, France. DATEM is an abbreviation for Diacetyl tartaric acid esters of monoglycerides. | | | |

### EXAMPLE 2:

In an embodiment of a pet treat product. By definition a pet treat is not a complete and nutritionally balanced main meal. This treat is manufactured by extrusion following the same recipe as described in Example 1 with the following modifications:

### Dry mix (% of the total recipe):

- 33 % Expanded rice (RIZINEL® EX 150)
- 25 % Wheat gluten
- 3 % Puffed wheat
- 3 % Poultry meal
- 6 % Other ingredients (preservatives, flavours, colorants, anti-stalling agent)

### Liquid mix (% of the total recipe)

- 20 % Glycerol
- 10 % Water

### EXAMPLE 3:

Another embodiment of a pet treat is described below. The recipe is identical to Example 2 except the Pork gelatine is the protein source in place of the wheat gluten. Because of gluten replacement by gelatin, the product achieved has a different texture which is softer compared to the treat described in Example 2.

### Dry mix (% of the total recipe):

- 33 % Expanded rice (RIZINEL® EX 180)
- 25 % Pork gelatine
- 3 % Puffed wheat
- 3 % Poultry meal
- 6 % Other ingredients (preservatives, flavours, colorants, anti-stalling agent)

### Liquid mix (% of the total recipe)

- 20 % Glycerol 86

### EXAMPLE 4:

In another embodiment, a pet treat is described below. The recipe is identical to Example 2 except glycerol is replaced by a mixture of sorbitol and glycerol. The product shall have a longer shelf life than the treat described in Example 2.

### Dry mix (% of the total recipe):

- 33 % Expanded rice (RIZINEL® EX 180)
- 15 % Pork gelatine
- 3 % Puffed wheat
- 13 % Poultry meal
- 6 % Other ingredients (preservatives, flavours, colorants, anti-stalling agent)

### Liquid mix (% of the total recipe)

- 15% Glycerol 86
- 5 % sorbitol

### EXAMPLE 5:

In another embodiment of a pet treat. The recipe is identical to Example 3 except glycerol is replaced by a mix of Dimodan ®. (Distilled Monoglyceride) and water. This will improve the cohesion of the product and the reactivity between the protein and expanded rice.

### Dry mix (% of the total recipe):

- 33 % Expanded rice (RIZINEL® EX 180)
- 15 % Pork gelatine
- 3 % Puffed wheat
- 13 % Poultry meal
- 6 % Other ingredients (preservatives, flavours, colorants, anti-stalling agent)

### Liquid mix (% of the total recipe)

- 3% Dimodan ®
- 17% Glycerol 86

### EXAMPLE 6:

In this embodiment, the recipe is identical to Example 5 except pork gelatine is replaced by wheat gluten. Wheat gluten is more reactive than the gelatine. Therefore the cohesion is further increased.

### Dry mix (% of the total recipe):

- 33 % Expanded rice (RIZINEL® EX 180)
- 25 % wheat gluten
- 3 % Puffed wheat
- 3 % Poultry meal
- 6 % Other ingredients (preservatives, flavours, colorants, anti-stalling agent)

### Liquid mix (% of the total recipe)

- 3% Dimodan ®
- 17% Glycerol 86

### EXAMPLE 7:

This is a further embodiment of this invention. The recipe is identical to Example 1 except Rizinel® is replaced by rice pretreated by ultra high pressure technology and glycerol is replaced by a mix of sucrose ester of fatty acid and glycerol 86. Ultra high pressure treatment was applied. The high pressure treatment results in a different starch reactivity and results in creating a new starch lamellar layer of a higher density. This is an example of using sucrose fatty acid ester as a bridger.

### Dry mix (% of the total recipe):

- 33 % high pressure rice
- 25 % wheat gluten
- 3 % Puffed wheat
- 3 % Poultry meal
- 6 % Other ingredients (preservatives, flavours, colorants, anti-stalling agent)

### Liquid mix (% of the total recipe)

- 5% sucrose fatty acid ester
- 15% Glycerol 86

It should be understood that various changes and modifications may be made to the presently preferred embodiments described herein. Such changes and modifications can be made without departing from the scope of the present invention and without diminishing its intended advantages. It is therefore intended that such changes and modifications be covered by the appended claims.

## Claims

1. An edible composition comprising
- at least one pre-activated, vegetable starch source and
- at least one bridger.

2. The composition according to claim 1, wherein the vegetable starch source is derived from a high amylase cereal source, a waxy-cereal source and/or a combination therefrom.

3. The composition according to claim 2, wherein the vegetable starch sources are selected from rice, millet, wheat, corn, rye, buckwheat, barley, sorghum, and cassava; or potato, soy, pea, lupin, and tapioca.

4. The composition according to any of claims 1 to 3 further comprising at least one protein source.

5. The composition according to claim 4, wherein the protein source is selected from an animal, vegetable, dairy, or biomass source or combinations thereof.

6. The composition according to claim 5, wherein the animal protein is selected from the group consisting of at least one of beef, chicken, turkey, pork, fish, lamb, duck, rabbit, albumin, eggs, gelatin, blood-plasma, salmon, tuna, cod, hake, mackerel, a meat-by-product or combinations thereof.

7. The composition according to claim 5, wherein the vegetable protein is selected from the group consisting of at least one of soy, wheat, millet, buckwheat, rye, sorghum, cassava, lupin, tapioca, corn, rice, bean, lima bean, legumes, pea, chickpea, alfalfa, potato, barley, oat, pretreated vegetable protein and combinations thereof.

8. The composition according to claim 7, wherein the protein is gluten.

9. The composition according to claim 5, wherein the dairy source is selected from casein, whey, milk and combinations thereof.

10. The composition according to claim 5, wherein the biomass source is a micro-organism culture.

11. The composition according to any one of claims 1 to 10, wherein the bridger is a molecule providing a bond and/or an interaction.

12. The composition according to claim 11, wherein the bridger provides a hydrogen-bond, an ionic bond, an apolar interaction, a covalent bond and a combination thereof.

13. The composition according to claim 12, wherein the bridger providing a hydrogen bond is selected from:
a) a molecular species that contains hydroxyl, sulfhydryl, sulfonyl groups or any combination thereof;
b) an oligosaccharide selected from glucose, fructose, xylose, lactose, sorbitol, maltodextrines, saccharose in the form of a syrup or powder and any combination thereof;
c) an polyhydric solvent selected from ethane diol, propanol-1; propanol-2; propane diol-1; 2,propane diol-1; 3, propane triol, and superior homolog of polyol series and any combination thereof;
d) an amino acid or peptide with sulfhydryl, hydroxy or amino groups and any combination thereof.

14. The composition according to claim 12,
wherein the bridger providing an ionic bond is selected from: sucrose fatty acid esters, sucrose stearate, glyceryl monostearate, polyoxyethylene monostearate, L-ascorbyl 6-palmitate, ascorbyl stearate, 6-O-palmitoyl-L-ascorbic acid, calcium and sodium stearoyl-2-actylates (SSL), succinylated monoglyceride (SMG), ethoxylated monoglycerides, polysorbates, diacetyl tartaric acid esters of mono- and diglycerides (DATEM), stearoyl tartrate, 3-mercapto-1,2 propanediol, dodecane thiol, thio-propanediol, methylsulfonylmethane (dimethyl sulfone), mannitol, maltose, lactose, dextrose, sucrose, sorbitol, fructose, glucono-delta-factone, propionate, sorbate, lysolecithin, fatty acids, hydrolysable tannins, phenolic acids, and polyphenols and any combination thereof.

15. The composition according to claim 12, wherein the bridger providing a covalent bond is selected from cationic and anionic emulsifiers, fatty acid derivatives, and phospholipids and any combination thereof.

16. The composition according to any one of claims 11 to 15, wherein the bridger is selected form hydrophobic derivatives, polyphenolic derivatives, lipogluten; thio-glycerides; tannins, emulsifiers, sugars, polyols, sugar modifiers, modified starch, and plastifiers and any combination thereof.

17. The composition according to any one of claims 1 to 16, further comprising at least one additive selected from fibers, cellulose, bentonite, dicalcium phosphate, a nutrient mixture, a reactive sugar, an amino acid, inert or non-digestible fillers and a preservative.

18. The composition according to claim 17, wherein the additive(s) is/are selected from potassium sorbate, sorbic acid, methyl para-hydroxybenzoate, calcium propionate and propionic acid.

19. The composition according to any one of claims 1 to 18, wherein the moisture content is the range of about 5 to about 85 % by weight.

20. A pet food product comprising the composition according to any of claims 1 to 19.

21. The pet food product according to claim 20 which is a snack or treat.

22. A method of the production of an edible composition comprising the steps of
- disposing about 10% to about 90% by weight of at least one pre-activated, vegetable starch source, and 0,1 to 40% by weight of at least one bridger in a dynamic device,
- mixing the constituents to form a homogeneous mixture and
- subjecting the mixture to a dynamic thermal treatment.

23. The method according to claim 22, wherein the pre-activated, vegetable starch source is used in an amount of about 40% to about 80% by weight and the bridger is used in an amount of 0.5 to about 20 % by weight.

24. The method according to claim 22 or 23 wherein at least one protein source is added to the mixture.

25. The method according to any of claims 22 to 24, wherein, prior to the mixing, the pre-activated, vegetable starch source is reduced into pre-expanded particles.

26. The method according to any of claims 22 to 25, wherein the dynamic thermal treatment is performed in an extruder device.

27. The method according to any of claims 22 to 26, wherein the vegetable starch source used is selected from a high amylase cereal source, a waxy-cereal source and a combination therefrom.

28. The method according to claim 27, wherein the vegetable starch sources are selected from rice, millet, wheat, corn, rye, buckwheat, barley, sorghum, and cassava; or potato, soy, pea, lupin, and tapioca.

29. The method according to any one of claims 24 to 28, wherein the protein source used is selected from an animal, vegetable, dairy, or biomass source or combinations thereof.

30. The method according to claim 29, wherein the animal protein is selected from the group consisting of at least one beef, chicken, turkey, pork, fish, lamb, duck, rabbit, albumin, eggs, gelatin, blood-plasma, salmon, tuna, cod, hake, mackerel, a meat-by-product or combinations thereof.

31. The method according to claim 29, wherein the vegetable protein is selected from the group consisting of at least one of soy, wheat, millet, buckwheat, rye, sorghum, cassava, lupin, tapioca, corn, rice, bean, lima bean, legumes, pea, chickpea, alfalfa, potato, barley, oat, pretreated vegetable protein and combinations thereof.

32. The method according to claim 31, wherein the protein is gluten.

33. The method according to claim 29, wherein the dairy source is selected from casein, whey, milk and combinations thereof.

34. The method according to claim 29, wherein the biomass source is a micro-organism culture.

35. The method according to any one of claims 22 to 34, wherein the bridger used is a molecule providing a bond and/or an interaction.

36. The method according to claim 35,
wherein the bridger provides a hydrogen-bond, an ionic bond, an apolar interaction, a covalent bond and a combination thereof.

37. The method according to claim 36,
wherein the bridger providing a hydrogen bond is selected from:
a) a molecular species that contains hydroxyl, sulfhydryl, sulfonyl groups or any combination thereof;
b) an oligosaccharide selected from glucose, fructose, xylose, lactose, sorbitol, maltodextrines, saccharose in the form of a syrup or powder and any combination thereof;
c) an polyhydric solvent selected from ethane diol, propanol-1; propanol-2; propane diol-1; 2,propane diol-1; 3, propane triol , and superior homolog of polyol series and any combination thereof;
d) an amino acid or peptide with sulfhydryl, hydroxy or amino groups and any combination thereof.

38. The method according to claim 36, wherein the bridger providing an ionic bond is selected from: sucrose fatty acid esters, sucrose stearate, glyceryl monostearate, polyoxyethylene monostearate, L-ascorbyl 6-palmitate, ascorbyl stearate, 6-O-palmitoyl-L-ascorbic acid, calcium and sodium stearoyl-2-actylates (SSL), succinylated monoglyceride (SMG), ethoxylated monoglycerides, polysorbates, diacetyl tartaric acid esters of mono- and diglycerides (DATEM), stearoyl tartrate, 3-mercapto-1,2 propanediol, dodecane thiol, thio-propanediol, methylsulfonylmethane (dimethyl sulfone), mannitol, maltose, lactose, dextrose, sucrose, sorbitol, fructose, glucono-delta-factone, propionate, sorbate, lysolecithin, fatty acids, hydrolysable tannins, phenolic acids, and polyphenols and any combination thereof.

39. The method according to claim 36, wherein the bridger providing a covalent bond is selected from: cationic and anionic emulsifiers, fatty acid derivatives, and phospholipids and any combination thereof.

40. The method according to any one of claims 35 to 39, wherein the bridger is selected form hydrophobic derivatives, polyphenolic derivatives, lipogluten; thio-glycerides; tannins, emulsifiers, sugars, polyols, sugar modifiers, modified starch, and plastifiers and any combination thereof.

41. The method according to any one of claims 22 to 40, further adding at least one additive selected from fibers, cellulose, bentonite, dicalcium phosphate, a nutrient mixture, a reactive sugar, an amino acid, inert or non-digestible fillers and a preservative.

42. The method according to claim 41, wherein the additive(s) is/are selected from potassium sorbate, sorbic acid, methyl para-hydroxybenzoate, calcium propionate and propionic acid.

43. The method according to any one of claims 22 to 42, wherein the moisture content of the composition is adjusted to be in the range of about 5 to about 85 % by weight.

44. Use of a composition according to any of claims 1 to 19 for the manufacture of a pet food product to improve the dental hygienic condition of a pet.

45. Use of a composition according to any of claims 1 to 19 for the manufacture of a pet food product to treat obesity of a pet.
